# EUROPEAN PATENT SPECIFICATION

(11) **EP 2 495 794 B1**
(45) Date of publication and mention of the grant of the patent: **17.05.2017**
(21) Application number: 12157979.1
(22) Date of filing: 02.03.2012
(51) Int. Cl.: H01M 10/04, H01M 10/48, H01M 2/02, H01M 2/34, H01M 10/42, H01M 6/42

(54) **Battery pack**
Batteriepackung
Bloc-batterie

(30) Priority: 02.03.2011 US 201161448541 P; 08.12.2011 US 201113315273
(43) Date of publication of application: 05.09.2012
(73) Proprietor: Samsung SDI Co., Ltd., Yongin-si, Gyeonggi-do (KR)
(72) Inventor: Lee, Jong-Min, Gyeonggi-do (KR)
(74) Representative: Mounteney, Simon James

(56) References cited:
- EP-A1- 1 432 053
- EP-A1- 2 200 111
- WO-A1-2006/137679
- GB-A- 2 393 569
- US-A1- 2006 071 637
- US-A1- 2007 279 001
- US-A1- 2011 039 132

## Description

The present invention relates to a battery back including a protection circuit module a bare cell and a thermistor that senses the temperature of the bare cell.

Recently, the use of mobile electronic devices has become increasingly widespread with the rapid development of the electronic and communication industries. Secondary batteries are usually used to power these devices, in consideration of economical efficiency.

Secondary batteries can also be used for larger devices, such as electric tools, electric bicycles, and vehicles. Such devices usually require a higher output and high power, in comparison to mobile phones and notebooks.

Higher power battery packs often include a protection device for safety. For example a temperature sensitive device such as a thermistor may be provided for sensing the temperature of the bare cell or cells within the pack. When provided , the protection device transmits a signal to a protection circuit module to cut the current when the temperature of the battery pack rapidly increases thereby avoiding the generation of excess heat or, worse still, ignition or explosion.

In some conventional battery packs the temperature sensitive device can become displaced due to physical shock. This can cause defective operation, which means that the battery pack becomes unsafe. Furthermore, manufacturing can be difficult if the structural integrity of the battery pack is to be preserved during assembly of the battery pack. EP2200111 A1 discloses a battery pack comprising a thermistor attached to a protection circuit module.

The present invention has been made in an effort to provide a battery pack that avoids these problems of the prior art.

Accordingly, the invention provides a battery pack as set out in Claim 1. Preferred features of the invention are set out in Claims 2 to 15.

According to the present invention, since the thermistor may be firmly attached to the protection circuit module, it is consequently possible to provide a battery pack in which the thermistor is not easily separated from the protection circuit module by external shock.

Further, the invention also makes it possible to provide a battery pack having improved workability of attaching a thermistor to a bare cell so as to increase accuracy in sensing the temperature of the bare cell.
FIG. 1 is a perspective view showing a battery pack according to a preferred embodiment of the present invention.
FIG. 2 is a view of a thermistor.
FIG. 3 is a perspective view of a protection circuit module.
FIGS. 4 and 5A are views showing when the thermistor is attached to the protection circuit module according to the invention.
FIG. 5B is a view showing when the protection circuit mode is attached to the bare cells of the battery pack in accordance with the invention
FIG. 6 is a view showing a cross-section when the thermistor is attached to a protection circuit module according to another embodiment of the present invention.
FIG. 7 is a view showing a cross-section when the thermistor is attached to a protection circuit module according to another embodiment of the present invention.

The details of other embodiments are included in the detailed specification and the drawings.

Advantages and features of the present invention and methods to achieve them will be clear from the embodiments of the invention that are described below in detail with reference to the accompanying drawings. However, the present invention is not limited to the embodiment described hereafter and may be implemented in various ways. Further, connection of a part with another part includes direct connection and electric connection of the parts with another device therebetween. Further, the parts not related to the present invention are removed in order to make the description of the present invention clear, and like components are given like reference numerals throughout the specification.

Hereinafter, the present invention is described with reference to the accompanying drawings.

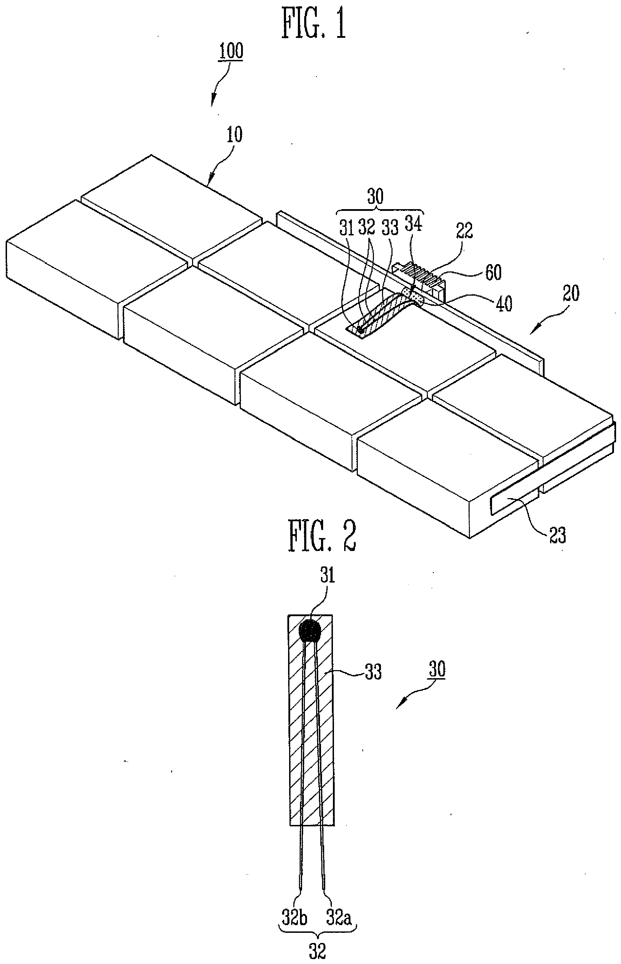

FIGS. 1 to 5B are views showing a first embodiment of the present invention.

Referring to FIG. 1, a battery pack 100 according to a preferred embodiment of the present invention includes a plurality of electrically connected bare cells 10, and a thermistor 30 that senses the temperature of the bare cells 10 and transmits the temperature to a protection circuit module 20. The protection circuit module 20 is physically connected with the bare cells 10 where the thermistor 30 is attached.

One side of the thermistor 30 is attached at a right angle to an edge 22 of the protection circuit module 20. One end of the thermistor 30 is distal relative to the protection circuit module 20 and a side of the thermistor 30 that addresses the protection circuit module 20 is referred to as an addressing side 34 of the thermistor 30.

A support 40 is further included between the addressing side 34 of the thermistor 30 and the protection circuit module 20. The support 40 is disposed between the thermistor 30 and the protection circuit module 20 and fills the space between the addressing side 34 of the thermistor 30 and the protection circuit module 20 such that the addressing side 34 of the thermistor 30 and the protection circuit module 20 are connected by the support 40.

In this embodiment, the protection circuit module 20 is arranged in the longitudinal direction of the bare cells 10. Therefore, When the thermistor 30 is arranged substantially perpendicular to the protection circuit module 20, the thermistor 30 is arranged substantially perpendicular to the longitudinal direction of the bare cells 10 as well.

Each bare cell 10 may include an electrode case, an electrode assembly and an electrolyte accommodating in the electrode case.

Each electrode assembly may be composed by wounding or stacking an anode plate, a cathode plate, and a separator disposed between the plates. The electrode assembly formed as described above constitutes the bare cell by being accommodated with the electrolyte in the electrode case, and the anode plate and the cathode plate of the electrode assembly electrochemically reacts with the electrolyte. The electrochemical energy produced by the chemical reaction is transmitted to external electronic devices, to which the bare cells 10 are electrically connected.

The electrode cases are generally cuboidal in this embodiment, but they may be, for example, a pouch type, a square type, or a cylindrical type in other embodiments.

The bare cells 10 are each a chargeable/rechargeable secondary battery, for example, a lithium ion battery or a lithium polymer battery.

In general, bare cells that are secondary batteries should be prevented from being overcharged or overdischarged in order to keep the optimum performance. For example, when a bare cell is overcharged, the electrolyte in the bare cell is decomposed and a gas may be produced. The gas is a factor that increases the internal pressure of the bare cell and may cause the electrolyte to leak out of the bare cell, if excessive, it may cause the bare cell to ignite or explode.

Further, when a bare cell is overdischarged, the cathode of the electrode assembly in the bare cell may be damaged. The damage to the cathode may decrease the charging-discharging performance of the bare cell.

The protection circuit module 20 is included in the battery pack 10, to prevent the bare cells 10 from being overcharged or overdischarged. It also serves to extend the charging-recharging life cycle of the bare cells 10 and is mounted on the battery pack to prevent shorting of the bare cells 10 by a charger or an external terminal.

The protection circuit module 20 includes a printed circuit board and protection circuit devices. One or more devices that can connect the bare cells 10 with an external electronic device are mounted on the printed circuit board.

Further, the protection circuit module 20 is further equipped with a connector 60 separate from an electrode tab 23.

The electrode tab 23 may be made of a conductor, such as nickel or copper. The electrode tab 23 is connected to the cathode and anode terminals of the bare cells 10, and the electrode tab 23 connected as described above is connected to the protection circuit module 20, such that the protection circuit module 20 and the bare cells 10 are electrically connected.

The connector 60 is for connection to an external electronic device. The protection circuit module 20 is therefore able to be electrically connected with an external electronic device by the connector 60.

Referring to FIG. 2, the thermistor 30 in the present embodiment is a device that senses the temperature of the bare cells 10 and transmits the temperature to the protection circuit module 20. It comprises a temperature sensing part 31, first and second lead wires 32a and 32b, and an insulating film 33.

The temperature sensing part 31 senses the temperature of the bare cells 10 and takes the form of a resistor that is sensitive to heat and has a characteristic that the resistance is considerably changed by a temperature change of a material. In this embodiment, the temperature sensing part 31 has a positive temperature coefficient, in which the resistance increases with the increases in temperature. However it may alternatively have a negative temperature coefficient, in which the resistance decreases with the increase in temperature.

A pair of lead wires 32 are connected to the temperature sensing part 31. In the thermistor 30 according to the present invention, the temperature sensing part 31 and the pair of lead wires 32 are covered by the insulating film 33. The pair of lead wires 32 have substantially the same length.

The lead wires 32 are made of a material that can be electrically connected, so as to indicate the temperature of the bare cells 10 which is sensed by the temperature sensing part 31, to the protection circuit module 20.

The other portions of the lead wires 32, except for both ends, are covered by the insulating film 33. When the entire lead wires 32 are exposed they may generate a short by contact with conductors, such as the bare cells 10 or the electrode tab 23. Further, the lead wires 32 are thin wires, such that the physical strength is low. Therefore, the insulating film makes it possible to electrically insulate the lead wires 32 and reinforce the mechanical strength of the lead wires 32. As a consequence, the thermistor 30 can be easily attached to the protection circuit module 20 and the bare cells 10, thereby improving workability.

As described above, the lead wires 32 are preferably covered with the insulating film, except for both ends. Since the thermistor 30 is supposed to be electrically connected with the protection circuit module 20 through the lead wires 32, both ends of the lead wires 32 are exposed to the outside of the insulating film 33. Further, when both ends of the lead wires 32 are attached to the protection circuit module 20, both ends of the lead wires 32 can be soldered to the protection circuit module 20 in order to increase the attachment strength.

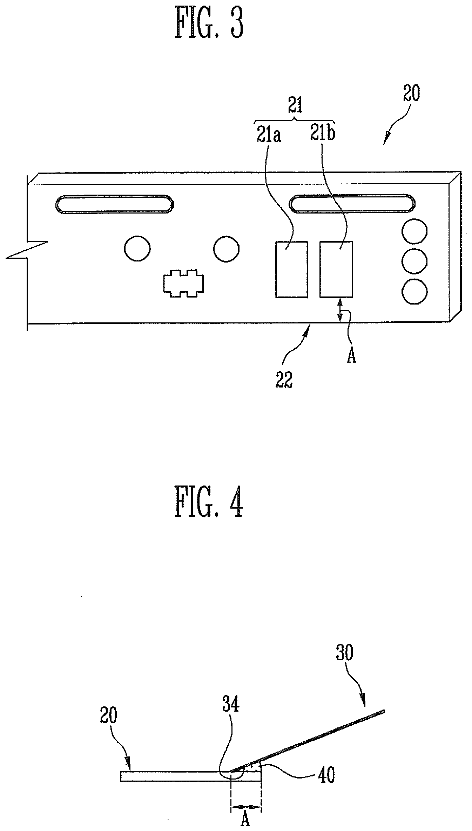

FIG. 3 is a perspective view of a protection circuit module.

Referring to FIG. 3, the protection circuit module 20 includes a thermistor seat 21 where the thermistor 30 is attached.

The protection circuit module 20 according to this embodiment is a substantially rectangular thin plate with long and short edges. The protection circuit module 20 is arranged with the long edges in parallel with the longitudinal direction of the bare cells 10. It is preferable that the thermistor seat 21 is disposed at a predetermined distance from one edge 22 of the protection circuit module 20.

The thermistor seat 21 is composed of first and second thermistor seats 21a and 21 b. The first lead wire 32a of the thermistor 30 is attached to the first thermistor seat 21 a and the second lead wire 32b is attached to the second thermistor seat 21 b. Therefore, the thermistor 30 can transmit the temperature data sensed by the temperature sensing part 31 of the thermistor 30 to the protection circuit module 20.

The first and second lead wires 32a and 32b may be soldered to the first and second seats 21 a and 21 b. Consequently, the first and second lead wires 32a and 32b can be firmly attached to the first and second seats 21a and 21b by the soldering. Therefore, the thermistor 32 is not easily separated from the protection circuit module 20 by external shock.

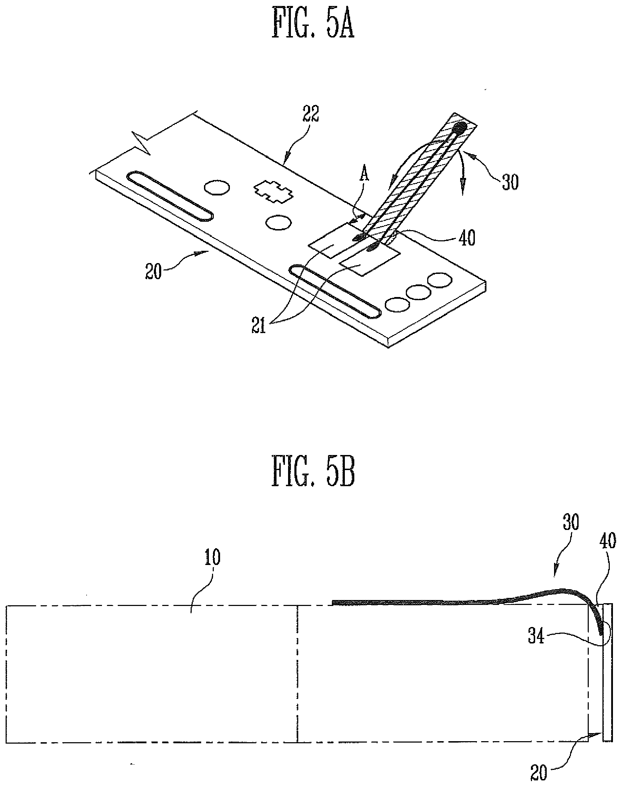

FIGS. 4 and 5A are views showing when the thermistor is attached to the protection circuit module according to this embodiment of the invention.

Referring to FIGS. 4 and 5A, in the protection circuit module 20, the thermistor seat 21 is disposed at a predetermined distance A from the long edge 22 of the protection circuit module 20.

Referring to FIG. 4, the addressing side 34 of the thermistor 30 is the part of the thermistor 30 that addresses the protection circuit module 20. The size of the addressing side 34 of the thermistor 30 depends on the distance A. Further, the support 40 connecting the thermistor 30 and the protection circuit module 20 is disposed between the addressing side 34 and the protection circuit module 20.

The seat-spaced distance A may be 0.2mm to 0.8mm. For example, when the seat-space distance A is under 0.2mm, the support 40 that comes in contact with the addressing side 34 of the thermistor 30 is not sufficiently formed. Accordingly, the thermistor 30 is not in firm contact to the protection circuit module 20 and easily separated by falling or external shock. Further, when the seat-spaced distance A is above 0.8mm, the space for mounting the protection device to the protection circuit module 20 becomes restricted. Therefore, it is preferable that the seat-spaced distance A is 0.2mm to 0.8mm and it is more preferable that the seat-spaced distance A is 0.5mm.

In this embodiment, the support 40 is disposed between the addressing side 34 of the thermistor 30 and the protection circuit module 20. The support 40 may be a bonding member. The bonding member may be, for example, made from silicone or epoxy. The support 40 improves the attachment between the thermistor 30 and the protection circuit module 20.

In the attachment method of the thermistor, the thermistor 20 is attached to sense the temperature of the bare cells 10 after the thermistor 30 is attached first to the protection circuit module 20. The temperature sensing part 31 of the thermistor 30 is particularly closely attached to the bare cells 10 to accurately sense the temperature of the bare cells 10. This can be seen most clearly in FIGS. 1 and 5B. To achieve the close contact, the thermistor 30 is bent backwards, away from the protection circuit module, so that the surface that is opposite to the protection circuit module 20 is brought into close physical contact with the bare cells 10. The relationship between the thermistor 30 and the bare cells may be secured by the outer packaging of the battery pack or some other physical component, such as a tape or clamp. Alternatively, close contact between the thermistor 30 and the bare cells 10 may be secured using an adhesive material with a high thermal conductivity.

In this particular embodiment, the thermistor 30 is bent back from the protection circuit module 20 by 90°. However this angle is essentially determined by the outer geometry of the bare cells and could be different for bare cells having a different case shape. In addition, the angle could be different if the protection circuit module 20 was affixed to a different component of the battery pack or even a different surface of the bare cells 10. In the latter case, it should be noted that the protection circuit module 20 and thermistor 30 could be fixed to the same surface of the bare cells, in which case there need be no bend at all.

A large pulling force can be applied to the thermistor 30 by pulling the temperature sensing part 31 of the thermistor 30 and the pulling force influences the attachment portion of the protection circuit module 20 and the thermistor 30. If excessive, the thermistor 30 attached to the protection circuit module 20 may be separated. As described above, when the thermistor 30 is separate, the temperature of the bare cells 10 cannot be transmitted to the protection circuit module 20, such that a problem may occur in safety of the battery pack 100.

The battery pack 100 according to the present invention further includes the support 40 between the thermistor 30 and the protection circuit module 20. The support 40 firmly attaches the thermistor 30 and the protection circuit module 20. Therefore, the thermistor 30 is not easily separated even under large pulling force, such that it is possible to prevent defect due to the separation of the thermistor 30 which may occur in assembling the battery pack 100.

Further, the addressing side 34 of the thermistor 30 can be supported by the support 40. That is, the support 40 can keep a predetermined gap between the addressing side 34 of the thermistor 30 and the protection circuit module 20 such that the thermistor 30 and the protection circuit module 20 are not in direct contact. The spaced degree of the thermistor 30 and the protection circuit module 20 may depend on the support 40.

When the thermistor 30 is attached to the bare cells 10, the portion of the thermistor 30 where the thermistor 30 is close to the protection circuit module 20 is the portion that is mostly influenced by force. The support 40 is therefore disposed at the portion of the thermistor 30 which is close to the protection circuit module 20, such that the force applied to the thermistor 30 can be minimized by the support 40.

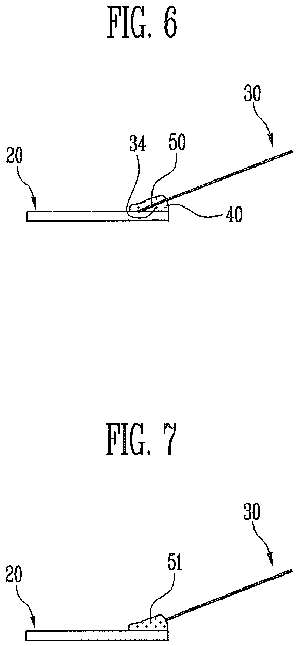

FIGS. 6 and 7 are views showing cross-sections when the thermistor is attached to a protection circuit module according to different embodiments of the present invention. Features of these embodiments that are the same as those described with reference to FIGS. 1 to 5 will not be described again.

Referring to FIG. 6, the thermistor 30 further includes fixing portions 50 at both ends of the first and second lead wires 32a and 32b that are in contact with the protection circuit module 20. The fixing portions are disposed opposite to the addressing side 34 of the thermistor 30. In the thermistor 30, the support 40 is disposed between the addressing side 34 of the thermistor 30 and the protection circuit module 20, while the fixing portions 50 are located on the opposite side of the thermistor 30 to the support 40. The fixing portions 50 reinforce the attachment between the protection circuit module 20 and the thermistor 30. The fixing portions 50 may be made of silicone or epoxy.

Referring to FIG. 7, the support 40at the addressing side 34 (see FIG. 6) of the thermistor 30 is extended to the fixing portions 50 at the opposite side to the addressing side 34. That is, both sides of the thermistor 30 are also covered by the side fixing portions 51, such that the attachment between the thermistor 30 and the protection circuit module 20 can be reinforced. Therefore, the side fixing portions 51 prevent left-right movement of the thermistor 30, in addition to up-down movement of the thermistor 30.

In the embodiments shown in FIGS. 6 and 7, the support 40 and the fixing portion 30 are made of different materials. However the support 40 and the fixing portions 50 may also be made of the same material, and consequently they may be formed by one process. Therefore, the fixing efficiency increases and the material cost can be reduced, such that productivity of the battery pack can be improved.

It will be understood to those skilled in the art that the present invention may be implemented in various ways without departing from the scope of the present invention. Accordingly, the apparatus described herein is not limited to the described embodiments.

## Claims

1. A battery pack (100) comprising:
a bare cell (10),
a protection circuit module (PCM) (20) electrically connected with the bare cell (10), and
a thermistor (30) for sensing the temperature of the bare cell (10);
wherein the thermistor (30) is attached to a first surface of the PCM (20) with a first side (34) of the thermistor (30) facing at least partially towards the said first surface, and a support (40) is disposed between the first surface and the first side (34), wherein the support (40) retains at least a portion of the said first side (34) in an inclined relationship with respect to the said first surface.

2. A battery pack according to Claim 1, wherein the first surface comprises a first edge (22) and the thermistor (30) is connected to the PCM (20) in a region of the first surface that is adjacent the first edge (22).

3. A battery pack according to Claim 2, wherein the thermistor (30) projects from the PCM (20) in a direction substantially perpendicular to the said first edge (22).

4. A battery pack according to any preceding claim, wherein the support (40) is a bonding member that forms a bond between the thermistor (30) and the PCM (20).

5. A battery pack according to Claim 4, wherein the support (40) comprises silicone or an epoxy.

6. A battery pack according to any preceding claim, further comprising a fixing portion (50) for reinforcing the connection between the thermistor (30) and the PCM (20).

7. A battery pack according to Claim 6, wherein the fixing portion (50) is at least partially located on an opposite side of the thermistor (30) to the first side (34).

8. A battery pack according to claim 8 or 7, wherein the fixing portion (50) is integrally formed with the support (40).

9. A battery pack according to Claim 6, 7 or 8, wherein the fixing portion (50) comprises silicone or an epoxy.

10. A battery pack according to any preceding claim, wherein the PCM comprises a seat (21) and the thermistor (30) is attached to the PCM (20) via the seat (21).

11. A battery pack according to Claim 10 when dependent upon Claim 2, wherein the seat (21) is spaced from the first edge (22) by a spacing distance (A).

12. A battery pack according to Claim 11, wherein the spacing distance (A) is from 0.2 to 0.8mm and optionally 0.5mm.

13. A battery pack, according to any preceding claim wherein a side of the thermistor that is opposite the said first side contacts a surface of the bare cell.

14. A battery pack according to Claim 13, wherein a portion of the thermistor is bent away from the PCM towards the said bare cell.

15. A battery pack according to any preceding claim, comprising a plurality of bare cells (10).

## Patentansprüche

1. Batteriepackung (100), umfassend:
eine Rohzelle (10),
ein Schutzschaltungsmodul (PCM) (20), welches mit der Rohzelle (10) elektrisch verbunden ist,
und
einen Thermistor (30) zum Erfassen der Temperatur der Rohzelle (10);
wobei der Thermistor (30) an einer ersten Oberfläche des PCM (20) befestigt ist, wobei eine erste Seite (34) des Thermistors (30) zumindest teilweise der ersten Oberfläche zugewandt ist, und wobei ein Halter (40) zwischen der ersten Oberfläche und der ersten Seite (34) angeordnet ist, wobei der Halter (40) zumindest einen Abschnitt der ersten Seite (34) in einem geneigten Verhältnis bezüglich der ersten Oberfläche hält.

2. Batteriepackung nach Anspruch 1, wobei die erste Oberfläche einen ersten Rand (22) umfasst und der Thermistor (30) mit dem PCM (20) in einem Bereich der ersten Oberfläche verbunden ist, welcher an dem ersten Rand (22) angrenzt.

3. Batteriepackung nach Anspruch 2, wobei der Thermistor (30) vom PCM (20) in einer im Wesentlichen senkrechten Richtung zum ersten Rand (22) vorsteht.

4. Batteriepackung nach einem der vorhergehenden Ansprüche, wobei der Halter (40) ein Verbindungselement ist, welches eine Verbindung zwischen dem Thermistor (30) und dem PCM (20) bildet.

5. Batteriepackung nach Anspruch 4, wobei der Halter (40) Silikon oder ein Epoxyd umfasst.

6. Batteriepackung nach einem der vorhergehenden Ansprüche, ferner umfassend einen Befestigungsabschnitt (50) zum Verstärken der Verbindung zwischen dem Thermistor (30) und dem PCM (20).

7. Batteriepackung nach Anspruch 6, wobei der Befestigungsabschnitt (50) zumindest teilweise auf einer gegenüberliegenden Seite des Thermistors (30) relativ zur ersten Seite (34) angeordnet ist.

8. Batteriepackung nach Anspruch 8 oder 7, wobei der Befestigungsabschnitt (50) einstückig mit dem Halter (40) gebildet ist.

9. Batteriepackung nach Anspruch 6, 7 oder 8, wobei der Befestigungsabschnitt (50) Silikon oder ein Epoxyd umfasst.

10. Batteriepackung nach einem der vorhergehenden Ansprüche, wobei das PCM eine Auflage (21) umfasst, und der Thermistor (30) am PCM (20) über die Auflage (21) befestigt ist.

11. Batteriepackung nach Anspruch 10, wenn abhängig von Anspruch 2, wobei die Auflage (21) vom ersten Rand (22) um einen Abstand (A) beabstandet ist.

12. Batteriepackung nach Anspruch 11, wobei der Abstand (A) zwischen 0,2 und 0,8 mm liegt und optional 0,5 mm ist.

13. Batteriepackung nach einem der vorhergehenden Ansprüche, wobei eine Seite des Thermistors, welche der ersten Seite gegenüberliegt, eine Oberfläche der Rohzelle kontaktiert.

14. Batteriepackung nach Anspruch 13, wobei ein Abschnitt des Thermistors vom PCM weg zur Rohzelle hin gebogen ist.

15. Batteriepackung nach einem der vorhergehenden Ansprüche, umfassend eine Mehrzahl von Rohzellen (10).

## Revendications

1. Bloc-batterie (100), comprenant :
une cellule nue (10) ;
un module de circuit de protection (PCM) (20) connecté électriquement à la cellule nue (10) ; et
un thermistor (30) pour détecter la température de la cellule nue (10) ;
dans lequel le thermistor (30) est fixé sur une première surface du PCM (20), un premier côté (34) du thermistor (30) étant orienté au moins partiellement vers ladite première surface, et un support (40) étant agencé entre la première surface et le premier côté (34), dans lequel le support (40) retient au moins une partie dudit premier côté (34) dans une relation inclinée par rapport à ladite première surface.

2. Bloc-batterie selon la revendication 1, dans lequel la première surface comprend un premier bord (22), le thermistor (30) étant connecté au PCM (20) dans une région de la première surface adjacente au premier bord (22).

3. Bloc-batterie selon la revendication 2, dans lequel le thermistor (30) déborde du PCM (20) dans une direction sensiblement perpendiculaire audit premier bord (22).

4. Bloc-batterie selon l'une quelconque des revendications précédentes, dans lequel le support (40) est un élément de liaison formant une liaison entre le thermistor (30) et le PCM (20).

5. Bloc-batterie selon la revendication 4, dans lequel le support (40) comprend de la silicone ou un époxyde.

6. Bloc-batterie selon l'une quelconque des revendications précédentes, comprenant en outre une partie de fixation (50) pour renforcer la connexion entre le thermistor (30) et le PCM (20).

7. Bloc-batterie selon la revendication 6, dans lequel la partie de fixation (50) est au moins en partie agencée sur un côté du thermistor (30) opposé au premier côté (34).

8. Bloc-batterie selon les revendications 8 ou 7, dans lequel la partie de fixation (50) est formée d'une seule pièce avec le support (40).

9. Bloc-batterie selon les revendications 6, 7 ou 8, dans lequel la partie de fixation (50) comprend de la silicone ou un époxyde.

10. Bloc-batterie selon l'une quelconque des revendications précédentes, dans lequel le PCM comprend un siège (21), le thermistor (30) étant fixé sur le PCM (20) par l'intermédiaire du siège (21).

11. Bloc-batterie selon la revendication 10, dépendant de la revendication 2, dans lequel le siège (21) est espacé du premier bord (22) par une distance d'espacement (A).

12. Bloc-batterie selon la revendication 11, dans lequel la distance d'espacement (A) est comprise entre 0,2 et 0,8 mm et correspond optionnellement à 0,5 mm.

13. Bloc-batterie selon l'une quelconque des revendications précédentes, dans lequel un côté du thermistor opposé audit premier côté contacte une surface de la cellule nue.

14. Bloc-batterie selon la revendication 13, dans lequel une partie du thermistor est fléchie à l'écart du PCM, vers ladite cellule nue.

15. Bloc-batterie selon l'une quelconque des revendications précédentes, comprenant plusieurs cellules nues (10).
